# EUROPEAN PATENT SPECIFICATION

(11) **EP 3 668 055 B1**
(45) Date of publication and mention of the grant of the patent: **06.04.2022**
(21) Application number: 18851872.4
(22) Date of filing: 09.08.2018
(51) Int. Cl.: H04L 29/08, H04L 12/18

(54) **SUBSCRIPTION PUBLICATION METHOD, AND SERVER**
ABONNEMENTVERÖFFENTLICHUNGSVERFAHREN UND SERVER
PROCÉDÉ DE PUBLICATION D'ABONNEMENT, ET SERVEUR

(30) Priority: 29.08.2017 CN 201710757780
(43) Date of publication of application: 17.06.2020
(73) Proprietor: Huawei Technologies Co., Ltd., Longgang District Shenzhen, Guangdong 518129 (CN)
(72) Inventor: XU, Jinchuan, Shenzhen Guangdong 518129 (CN); WU, Yingde, Shenzhen Guangdong 518129 (CN)
(74) Representative: Maiwald Patent- und Rechtsanwaltsgesellschaft mbH
(86) International application number: PCT/CN2018/099659
(87) International publication number: WO 2019/042110

(56) References cited:
- EP-A1- 1 952 604
- WO-A1-2016/168116
- CN-A- 101 193 077
- CN-A- 102 685 155
- US-A1- 2006 056 628
- US-A1- 2007 067 389
- Zhang Shengdong et al.: "Matching Structure Based on Attribute Grouping in Publish/Subscribe System", Computer Engineering, vol. 37, no. 23, 1 December 2011 (2011-12-01), pages 1-3, XP055677737, ISSN: 1000-3428, DOI: 10.3969/j.issn.1000-3428.2011.23.003

## Description

### TECHNICAL FIELD

Embodiments of this application relate to the communications field, and in particular, to a subscribe and publish method and a server.

### BACKGROUND

The Message Queue Telemetry Transport (MQTT) protocol is a message transport protocol in a publish/subscribe mechanism. The publish/subscribe mechanism is as follows: A subscribe client on a subscribe terminal having a management function such as a mobile phone or a notebook may send a subscribe message that includes a topic to a server, and a publish client on a publish terminal such as a temperature sensor may send a publish message that includes the topic to the server. In this way, the server may send the publish message to the subscribe client that subscribes to the topic included in the publish message. In addition, the MQTT protocol is lightweight, open, simple, and standard, and may be applied to a restricted environment such as machine-to-machine (M2M) communication or Internet of things (IOT).

US 2006/056628 A1 describes systems, methods, apparatuses, and computer program products for processing alerts and auditing in a publish/subscribe system.

EP 1 952 604 A1 describes for controlling access to a publish/subscribe message broker. Publish/subscribe functions provided by the message broker are divided into function sets. Each function set is associated with a communication path.

US 2007/067389 A1 describes systems and methods for managing subscription requests in a publish/subscribe messaging system.

In the IOT environment, a subscribe client on a subscribe terminal is usually used to manage many publish terminals by using publish clients on the publish terminals. One subscribe client may subscribe, by using a topic that includes a wildcard, to publish messages of all publish clients in the IOT environment, and perform fan-in processing on all the received publish messages. A fan-in process is as follows: The subscribe client may perform complex operations such as aggregation and statistics collection on all the publish messages, and present an operation result to a user in a form of an icon or a page or send an operation result to a next-layer device. Apparently, in this case, pressure of the subscribe client to process publish messages is proportional to a quantity of publish clients. However, a capability of the subscribe client to process publish messages is limited. Therefore, when the quantity of publish clients reaches a specific scale, one subscribe client cannot process all publish messages, and there is a need to add a subscribe client to process the publish messages together with the subscribe client. In this case, the subscribe client changes from "subscribing to which publish messages" to "processing which publish messages". In this way, how the subscribe client subscribes to a publish message that can be processed becomes the key. In the prior art, two solutions in which a subscribe client subscribes to a publish message that can be processed are provided:
In the prior art 1, a subscribe client may subscribe to publish messages of all publish clients one by one based on a capability of processing publish messages, to be specific, a quantity of publish messages that can be processed by the subscribe client is equal to a quantity of subscribe topics that are sent to a server. None of the subscribe topics includes a wildcard.

In the prior art 2, a subscribe client classifies different publish clients into different zones, so that the publish clients add zone identifiers to publish topics. In addition, the subscribe client determines, based on a capability of the subscribe client to process publish messages, zones whose publish messages can be processed, and adds these zone identifiers to the subscribe topics.

The prior art has at least the following disadvantages:
In prior art 1, the subscribe client needs to send subscribe topics to the server one by one. Therefore, when the subscribe client is expanded or migrated, a subscribe relationship on the subscribe client needs to be changed, in other words, the subscribe client first cancels a subscription and then renews the subscription. Consequently, it is relatively difficult to maintain the subscribe relationship on the subscribe client.

In the prior art 2, zones are classified by the subscribe client. Therefore, when the subscribe client is expanded or migrated, the subscribe client needs to re-classify the zones and publish subscribe messages. Consequently, it is relatively difficult to maintain a subscribe relationship on the subscribe client.

### SUMMARY

This application provides a subscribe and publish method and a server, so as to resolve a problem that it is relatively difficult to maintain a subscribe relationship on a subscribe client when the subscribe client subscribes to a publish message that can be processed.

To achieve the foregoing objective, the following technical solutions are used in this application.

According to a first aspect of this application, a subscribe and publish method is provided, according to independent claim 1. Further implementations of the first aspect are provided in the dependent claims.

According to a second aspect of this application, a server is provided, where the server may include modules that can implement the method according to the first aspect and each implementation of the first aspect.

### BRIEF DESCRIPTION OF DRAWINGS

FIG. 1 is a simplified schematic diagram of a system architecture to which embodiments of this application can be applied according to an embodiment of this application;
FIG. 2 is a flowchart of a subscribe and publish method according to an embodiment of this application;
FIG. 3 is a flowchart of another subscribe and publish method according to an embodiment of this application;
FIG. 4 is a schematic diagram of a format of a fixed header according to an embodiment of this application;
FIG. 5 is a schematic diagram of a format of a payload according to an embodiment of this application;
FIG. 6 is a diagram of a topology structure of a subscribe tree according to an embodiment of this application;
FIG. 7 is a flowchart of performing topic matching layer by layer according to an embodiment of this application;
FIG. 8 is a schematic diagram of composition of a server according to an embodiment of this application;
FIG. 9 is a schematic diagram of composition of another server according to an embodiment of this application; and
FIG. 10 is a schematic diagram of composition of another server according to an embodiment of this application.

### DESCRIPTION OF EMBODIMENTS

To resolve a problem that it is relatively difficult to maintain a subscribe relationship on a subscribe client when the subscribe client subscribes to a publish message that can be processed, the embodiments of this application provide a subscribe and publish method. A basic principle of the subscribe and publish method is as follows: A server receives a publish message that includes a topic name and that is sent by a publish client, and obtains an identifier of the publish client based on the received publish message. The server searches a subscribe tree based on the topic name, to obtain an identifier of a subscribe client, obtains, based on the identifier of the subscribe client and a first mapping table, a first tag corresponding to the identifier of the subscribe client, and obtains, based on the identifier of the publish client and the first mapping table, a second tag corresponding to the identifier of the publish client. The server may match the first tag with the second tag, and send the publish message to the subscribe client when determining that the first tag and the second tag successfully match. The subscribe tree is a topology structure including at least one topic filter, and the identifier of the subscribe client is an identifier corresponding to a topic filter that successfully matches the topic name. Each entry of the first mapping table includes an identifier of a client and a corresponding tag. The tag is used to indicate at least one type of attribute information of the client corresponding to the tag.

In this application, the first mapping table that records a correspondence between an identifier of a client and a tag is pre-stored in the server. When a topic name and a topic filter successfully match, the server may match attribute information of the publish client with that of the subscribe client, and when the attribute information of the publish client and that of the subscribe client successfully match, send the publish message to the subscribe client. In this way, when the subscribe client is migrated or expanded, the subscribe client does not need to republish a subscribe message, and only needs to change attribute information of a client, so as to resolve a problem that it is difficult for the subscribe client to maintain a subscribe relationship. In addition, the attribute information of the client in this application is a plurality of types of information that include zones. Compared with the prior art of matching only zones, the subscribe client may obtain publish messages of more dimensions, in other words, implement subscriptions of more dimensions. Therefore, scalability is better.

To facilitate understanding of a person skilled in the art, the embodiments of this application describe basic terms used in the embodiments of this application herein.
1. Topic: The topic is a bridge between a subscribe client and a publish client, and the topic may include a topic name and a topic filter. A topic included in a publish message is referred to as the topic name, and the topic name cannot include a wildcard, so as to publish a definite topic. A topic included in a subscribe message is referred to as the topic filter, and the topic filter may include a wildcard, so as to simultaneously subscribe to a plurality of topics. In the MQTT protocol, the topic is of a structured and multi-layer structure, the topic is layered by using a separator (/), and each layer is referred to as a topic level. The separator may be at any location in the topic, and adjacent separators are used to represent a topic level of a null character string, in other words, content of the topic level is null. For example, it is assumed that the topic is myhome/groundfloor/livingroom/temperature, and "myhome", "groundfloor", "livingroom", and "temperature" are all topic levels.

In addition, the wildcard included in the topic filter may include a multi-level wildcard and a single-level wildcard.
(1) The multi-level wildcard is represented by #, and is a wildcard used to match any topic level in the topic name. The multi-level wildcard may represent a plurality of topic levels. The multi-level wildcard is a last character of the topic filter. For example, the multi-level wildcard may be at a specific topic level. For example, the topic filter is #, and the separator may be followed by the multi-level wildcard. For example, the topic filter is myhome/groundfloor/#. If topic names shown in Table 1 exist,

**Table 1**

| | Topic name |
|---|---|
| 1 | myhome/groundfloor/livingroom/temperature |
| 2 | myhome/groundfloor/kitchen/temperature |
| 3 | myhome/groundfloor/kitchen/brightness |
| 4 | myhome/firstfloor/kitchen/temperature |
| 5 | myhome/groundfloor/kitchen/fridge/temperature |

topic names that successfully match the topic filter are topic names numbered 1, 2, 3, and 5, and a topic name that does not match the topic filter is a topic name numbered 4.
(2) The single-level wildcard is represented by +, and is a wildcard used to match a single topic level in the topic name. The single-level wildcard is a wildcard occupying the entire topic level, and may be at any topic level of the topic filter, including a first topic level and a last topic level. In addition, one topic filter may include a plurality of single-level wildcards, or may include both a multi-level wildcard and a single-level wildcard.

For example, assuming that a topic filter that includes a single-level wildcard is myhome/groundfloor/+/temperature, in the topic names shown in Table 1, topic names that successfully match the topic filter are topic names numbered 1 and 2, and topic names that do to match the topic filter are topic names numbered 3, 4, and 5.

2. Quality of service (QoS) means that a network can provide a better service capability for network communication by using various basic technologies. In the MQTT protocol, three levels of QoS can be provided, namely, QoS = 0, QoS = 1, and QoS = 2.

3. A subscribe tree is a topology structure including at least one topic filter. The subscribe tree may include a root node and at least one layer of subtree, and each layer of subtree includes at least one subtree. The root node is a logical node, and represents a root of all topic filters, and each subtree stores a topic level of a topic filter. A first-layer subtree connected to the root node is a subtree that stores a first topic level, a second-layer subtree connected to the first-layer subtree is a subtree that stores a second topic level below the first topic level, ending with a last topic level. Starting from a first-layer subtree and ending with a last-layer subtree, topic levels stored in all layers of subtrees may constitute a topic filter. In addition, each subtree that stores a last topic level of a topic filter stores an identifier that is of a subscribe client and that is corresponding to the topic filter and indication information used to indicate whether the subscribe client supports tag matching.

The following describes implementations of the embodiments of this application in detail with reference to accompanying drawings.

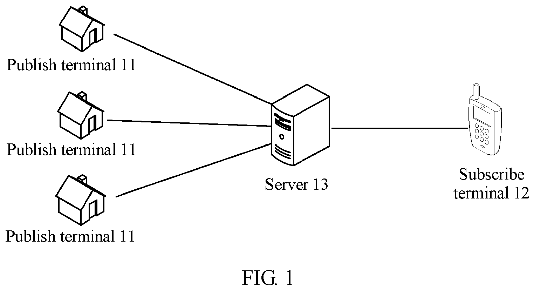

FIG. 1 is a simplified schematic diagram of a system architecture to which embodiments of this application can be applied according to an embodiment of this application. As shown in FIG. 1, the system architecture may include at least one publish terminal 11, a subscribe terminal 12, and a server 13. An example in which three publish terminals are included is used in FIG. 1.

A publish client running on each of the at least one publish terminal 11 communicates with the server 13 by using the MQTT protocol, the server 13 communicates, by using the MQTT protocol, with a subscribe client running on the subscribe terminal 12, and the at least one publish client establishes an indirect connection to the subscribe client by using a topic.

A publish client runs on the publish terminal 11, and the publish client is a client that supports the MQTT protocol, and may be used as a message generator. The publish terminal 11 may be a temperature sensor, a humidity sensor, a meter, a water meter, or the like. An example in which the publish terminal 11 is the meter is used in FIG. 1.

In a possible implementation, the publish terminal 11 may directly access the server 13. In another possible implementation, the publish terminal 11 may access the server 13 by using an Internet of things gateway. In this case, the Internet of things gateway may be used as a bridge, and is configured to perform protocol or data format conversion on a message exchanged between the publish client running on the publish terminal 11 and the server 13. Alternatively, the Internet of things gateway may be used as a proxy for the publish terminal 11, so that the publish client running on the publish terminal 11 can send a publish message to the server 13 by using the Internet of things gateway.

A subscribe client runs on the subscribe terminal 12, and the subscribe client is a client that supports the MQTT protocol, and may be used as a publish message consumer or manager. The subscribe terminal 12 may be a mobile phone, a tablet computer, a notebook computer, an ultra-mobile personal computer (UMPC), a netbook, a personal digital assistant (PDA), a laptop, or the like. An example in which the subscribe terminal 12 is the mobile phone is used in this embodiment of this application.

A serving end that supports the MQTT protocol runs on the server 13, and is an execution body of a subscribe and publish mechanism. In specific implementation, a plurality of servers 13 may constitute a cluster, and subscribe and publish may be performed between the plurality of servers 13. To be specific, a server may be used as a subscribe client to send a subscribe message to another server, and after receiving a publish message, send the publish message to a subscribe client connected to the server.

It should be noted that in this embodiment of this application, the publish terminal may also be used as a subscribe terminal. In this case, the subscribe terminal is correspondingly used as a publish terminal. Specific forms of the publish terminal and the subscribe terminal are not limited in this embodiment of this application.

In addition, in this embodiment of this application, the server may send, based on an identifier of the subscribe client, the publish message to the subscribe client running on the subscribe terminal.

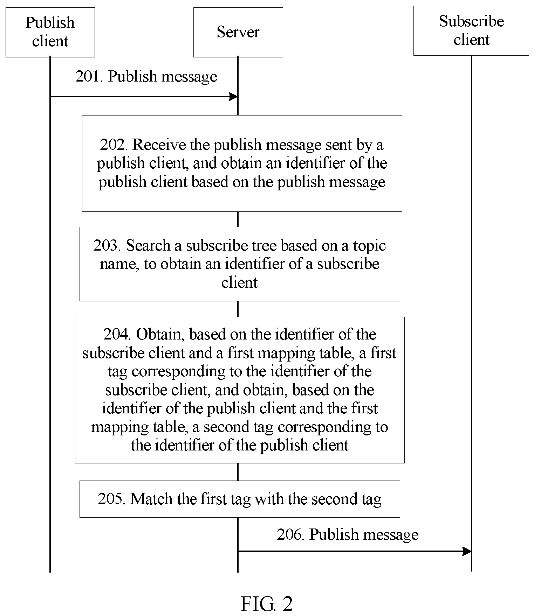

FIG. 2 is a flowchart of a subscribe and publish method according to an embodiment of this application. As shown in FIG. 2, the method may include the following steps.

201. A publish client sends a publish message to a server.

When a user name and a password of the publish client running on a publish terminal are authenticated, and the server stores a session of the publish client and an identifier that is of the publish client and that is corresponding to the session, the publish client may send the publish message to the server. The publish message may include a topic name.

For example, assuming that the publish terminal is a temperature sensor, a client running on the temperature sensor may add, to the publish message, a topic name such as "thermometer/temperature" and a temperature value collected by the temperature sensor, and send the publish message to the server.

202. The server receives the publish message sent by the publish client, and obtains an identifier of the publish client based on the publish message.

After the publish client sends the publish message to the server, the server may receive the publish message, and after determining that the publish client has permission for publish, obtain, based on a session in which the publish message is received, the identifier that is of the publish client and that is corresponding to the session.

203. The server searches a subscribe tree based on a topic name, to obtain an identifier of a subscribe client.

The identifier of the subscribe client is an identifier corresponding to a topic filter that successfully matches the topic name. After the server obtains the identifier of the publish client, the server may search the subscribe tree based on the topic name included in the publish message, to obtain the topic filter that successfully matches the topic name, and obtain the identifier of the subscribe client from a subtree that stores a last topic level of the topic filter. There may be a plurality of identifiers of subscribe clients.

To resolve a problem that it is relatively difficult to maintain a subscribe relationship on the subscribe client while on-demand offloading of the publish message is implemented, a topic and attribute information of a client may be separated, and the attribute information, namely, a tag of the client is pre-stored in the server. After the server obtains the identifier of the subscribe client, the server may send the publish message to the subscribe client when determining that a tag of the publish client and a tag of the subscribe client successfully match. Specifically, for each of the plurality of identifiers of the subscribe clients, the following steps 204 to 206 may be performed.

204. The server obtains, based on the identifier of the subscribe client and a first mapping table, a first tag corresponding to the identifier of the subscribe client, and obtains, based on the identifier of the publish client and the first mapping table, a second tag corresponding to the identifier of the publish client.

The tag is used to indicate at least one type of attribute information of the client corresponding to the tag.

The server may obtain, based on the identifier of the subscribe client and the first mapping table, the first tag corresponding to the identifier of the subscribe client, and obtain, based on the identifier of the publish client and the first mapping table, the second tag corresponding to the identifier of the publish client. Each entry of the first mapping table includes an identifier of a client and a corresponding tag. The identifier of the client may be the identifier of the subscribe client, or may be the identifier of the publish client.

It should be noted that in this embodiment of this application, a tag may be obtained by the server when a client registers with a serving end that supports the MQTT protocol, where the serving end runs on the server, or may be added by an administrator to a tag management module (tags manager) of the server. A specific manner in which the tag is stored in the server is not limited in this embodiment of this application. In addition, in this embodiment of this application, during running, the server may dynamically update, by using a communications interface for tag management, the tag corresponding to the identifier of the client, so that on-demand offloading of the publish message may be implemented without changing a subscribe relationship. Compared with the prior art in which a subscribe relationship needs to be changed when a client is expanded or migrated, a problem that it is relatively difficult to maintain the subscribe relationship on the subscribe client is resolved.

205. The server matches the first tag with the second tag.

After obtaining the first tag and the second tag, the server may match the first tag with the second tag, in other words, match at least one type of attribute information of the publish client with at least one type of attribute information of the subscribe client. In this embodiment of this application, a quantity of types of attribute information of the publish client is the same as a quantity of types of attribute information of the subscribe client, and the server may match attribute information of a same type. Only when all types of attribute information are successfully matched, the server can determine that the first tag and the second tag successfully match. If the first tag and the second tag successfully match, the server may perform the following step 206. If the first tag and the second tag do not match, the server may determine whether there is a next subscribe client, and if there is a next subscribe client, the server may repeatedly perform step 204 and step 205.

206. The server sends the publish message to the subscribe client.

It should be noted that after the server performs step 204 to step 206 for the identifier corresponding to the topic filter that successfully matches the topic name, the server may continue to obtain another topic filter that can successfully match the topic name. Each time the server obtains a successfully matched topic filter, the server may obtain a plurality of identifiers of subscribe clients from a subtree that stores a last topic level of the topic filter. In this case, the server may repeatedly perform step 204 to step 206 for the plurality of identifiers of the subscribe clients until the server obtains a last topic filter that matches the topic name, and send the publish message to a last subscribe client.

According to the subscribe and publish method provided in this embodiment of this application, after receiving the publish message that includes the topic name and that is sent by the publish client, and obtaining the identifier of the publish client based on the publish message, the server searches the subscribe tree based on the topic name in the publish message, to obtain the identifier that is of the subscribe client and that is corresponding to the topic filter that successfully matches the topic name. The server obtains the first tag based on the identifier of the subscribe client and the first mapping table, obtains the second tag based on the identifier of the publish client and the first mapping table, matches the first tag with the second tag, and sends the publish message to the subscribe client when determining that the first tag and the second tag successfully match. In this application, the first mapping table that records a correspondence between an identifier of a client and a tag is pre-stored in the server. When a topic name and a topic filter successfully match, the server may match attribute information of the publish client with that of the subscribe client, and when the attribute information of the publish client and that of the subscribe client successfully match, send the publish message to the subscribe client. In this way, when the subscribe client is migrated or expanded, the subscribe client does not need to republish a subscribe message, and only needs to change attribute information of a client, so as to resolve a problem that it is difficult for the subscribe client to maintain a subscribe relationship. In addition, the attribute information of the client in this application is a plurality of types of information that include zones. Compared with the prior art of matching only zones, the subscribe client may obtain publish messages of more dimensions, in other words, implement subscriptions of more dimensions. Therefore, scalability is better.

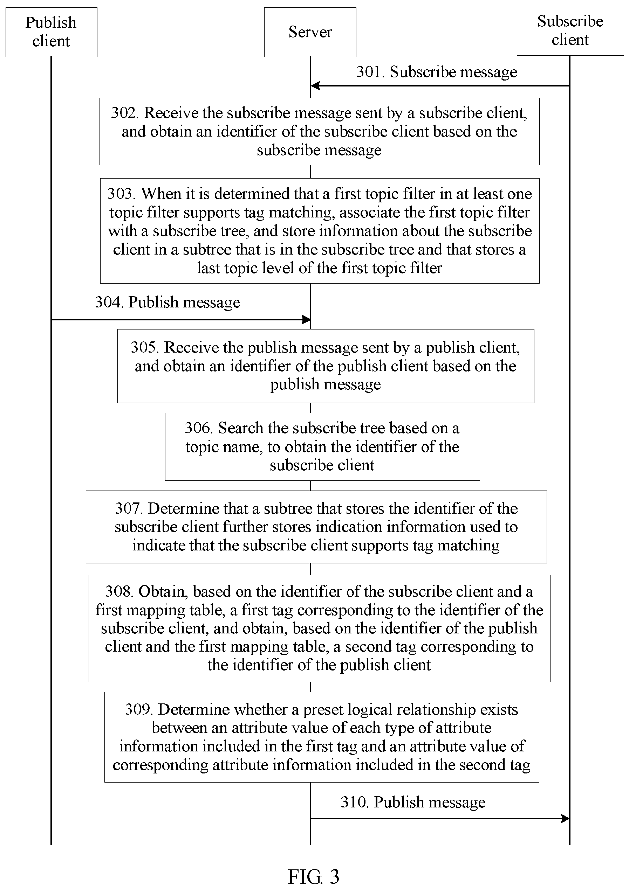

FIG. 3 is a flowchart of another subscribe and publish method according to an embodiment of this application. As shown in FIG. 3, the method may include the following steps.

301. A subscribe client sends a subscribe message to a server.

When an access control list (ACL) module of the server authenticates a user name and a password of the subscribe client running on a subscribe terminal, and a session management module stores a session of the subscribe client and an identifier that is of the subscribe client and that is corresponding to the session, the subscribe client may send the subscribe message to the server. The subscribe message includes at least one topic filter.

For example, assuming that the subscribe terminal is a mobile phone, and a temperature of a temperature sensor and power consumption of a meter need to be subscribed to, a client running on the mobile phone may add two topic filters such as "thermometer/+" and "ammeters/#" to the subscribe message, and send the subscribe message to the server.

Certainly, in specific implementation, a plurality of subscribe clients send subscribe messages to the server, and each subscribe message includes at least one topic filter. For example, it is assumed that eight subscribe clients send subscribe messages to the server. The second column in Table 2 shows topic filters included in the subscribe messages.

**Table 2**

| Identifier of a subscribe client | Topic filter |
|---|---|
| C1 | thermometer/+ |
| C1 | ammeters/# |
| C2 | ammeters/5678 |
| C3 | thermometer/1234 |
| C4 | thermometer/+ |
| C5 | ammeters/# |
| C6 | thermometer/1234 |
| C6 | ammeters/5678 |
| C7 | thermometer/+ |
| C8 | thermometer/+ |
| C8 | ammeters/+ |

It should be noted that to reserve an existing mechanism of supporting only topic matching while on-demand offloading of a publish message is implemented, whether the topic filter in the subscribe message supports tag matching may be indicated. In this embodiment of this application, whether the topic filter supports tag matching may be indicated in the following two manners.

Manner 1: A flag bit in the subscribe message is used to indicate whether the topic filter supports tag matching.

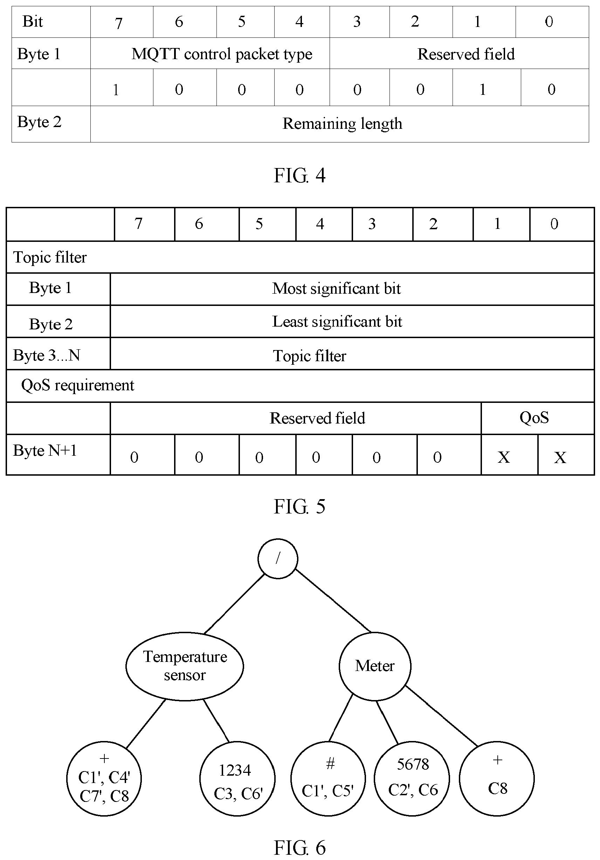

For example, the subscribe client may set a reserved field of the subscribe message as a flag bit, to indicate whether the topic filter included in the subscribe message supports tag matching. In this embodiment of this application, the subscribe message includes two parts: a header and a payload. The header includes a fixed header and a variable header, the variable header is related to a message type (the message type includes a subscribe message, a publish message, and the like), and a format of the variable header is fixed for all subscribe messages. FIG. 4 is a schematic diagram of a format of a fixed header. As shown in FIG. 4, the fixed header includes two bytes, bits 4 to 7 of a byte 1 are MQTT control packet types (MQTT control packet type), a byte 2 is a remaining length, and bits 0 to 3 of the byte 1 are reserved fields. The subscribe client may set any reserved field thereof as a first flag bit, and the first flag bit may include a first value or a second value. The first value is used to indicate that each of the at least one topic filter supports tag matching, and the second value is used to indicate that the at least one topic filter includes at least one topic filter that does not support tag matching.

FIG. 5 is a schematic diagram of a format of a payload. As shown in FIG. 5, the payload includes at least one topic filter, and an example in which one topic filter is included is used in FIG. 5. A byte 1 to a byte N represent one topic filter, the byte 1 represents a most significant bit (MSB), the byte 2 represents a least significant bit (LSB), and the byte 3 to the byte N represent a hierarchical structure of the topic filter. Bits 0 and 1 in a byte N+1 represent QoS identifiers corresponding to the topic filter, and bits 2 to 7 of the byte N+1 are reserved fields. The subscribe client may set any reserved field thereof as a second flag bit, and the second flag bit may include a third value or a fourth value. The third value is used to indicate that a topic filter corresponding to the second flag bit supports tag matching, and the fourth value is used to indicate that the topic filter corresponding to the second flag bit does not support tag matching.

It should be noted that in this embodiment of this application, values may be 0 or 1. In a possible implementation, the first value is 1, and the second value is 0. In another possible implementation, the first value is 0, and the second value is 1. In addition, in a possible implementation, the third value is 1, and the fourth value is 0. In another possible implementation, the third value is 0, and the fourth value is 1. It should be noted that the values may be specifically set based on a requirement in an actual application scenario. This is not specifically limited in this embodiment of this application. In this embodiment of this application, an example in which the first value is 1, the second value is 0, the third value is 1, and the fourth value is 0 is used for description.

Manner 2: A topic filter and identification information corresponding to the topic filter are stored in the server by using a communications interface configured to manage the topic filter.

For example, in this embodiment of this application, the topic filter and the identification information corresponding to the topic filter are pre-stored in the server by using the communications interface configured to manage the topic filter. The identification information may include a fifth value or a sixth value. The fifth value is used to indicate that the topic filter corresponding to the identification information supports tag matching, and the sixth value is used to indicate that the topic filter corresponding to the identification information does not support tag matching.

302. The server receives the subscribe message sent by the subscribe client, and obtains an identifier of the subscribe client based on the subscribe message.

After the subscribe client sends the subscribe message to the server, after determining that the subscribe client has permission for subscribe, the ACL module of the server may obtain, based on a session in which the subscribe message is received, the identifier that is of the subscribe client and that is corresponding to the session, and instruct a subscribe service module to process the subscribe message.

For example, it is assumed that the identifier of the subscribe client that is obtained by the server based on the session is C1, which is shown in the first column in Table 2.

303. When determining that a first topic filter in at least one topic filter supports tag matching, the server associates the first topic filter with a subscribe tree, and stores information about the subscribe client in a subtree that is in the subscribe tree and that stores a last topic level of the first topic filter.

The first topic filter is any one of the at least one topic filter, and the information about the subscribe client includes the identifier of the subscribe client and indication information used to indicate that the subscribe client supports tag matching. After the subscribe service module of the server receives an instruction from the ACL module, the subscribe service module may determine whether each of the at least one topic filter included in the subscribe message supports tag matching. For any topic filter such as the first topic filter, when determining that the first topic filter supports tag matching, the server may send an instruction to a first subscribe processing module included in the subscribe service module. After receiving the instruction, the first subscribe processing module may associate the first topic filter with the subscribe tree, and store, in the subtree that stores the last topic level of the first topic filter, the identifier of the subscribe client and the indication information used to indicate that the subscribe client supports tag matching. The server may send an instruction to a second subscribe processing module when determining that the first topic filter does not support tag matching. After receiving the instruction, the second subscribe processing module may associate the first topic filter with the subscribe tree, and store, in the subtree that stores the last topic level of the first topic filter, the identifier of the subscribe client and indication information used to indicate that the subscribe client does not support tag matching.

It should be noted that the server pre-stores a subscribe tree that includes only a root node before receiving no subscribe message. In this way, the server may associate the topic filter included in the subscribe message with the subscribe tree each time receiving the subscribe message.

In addition, in this embodiment of this application, it may be determined, in the following three manners, that the first topic filter supports tag matching.

Manner 1: When determining that the first flag bit includes the first value, the server determines that the first topic filter supports tag matching.

For example, in the manner of indicating whether the topic filter supports tag matching in the manner 1 in step 302, the subscribe service module may determine whether the first flag bit includes the first value or the second value. If the first flag bit includes the first value, it indicates that the at least one topic filter included in the subscribe message supports tag matching. In this case, the first subscribe processing module may associate the at least one topic filter with the subscribe tree one by one, and store, in the subtree that stores the last topic level of each topic filter, the identifier of the subscribe client and the indication information used to indicate that the subscribe client supports tag matching. If the first flag bit includes the second value, it indicates that the at least one topic filter includes the at least one topic filter that does not support tag matching. In this case, it may be determined, in the following manner 2, that the first topic filter supports tag matching.

Manner 2: When determining that the first flag bit includes the second value, and determining that the second flag bit corresponding to the first topic filter includes the third value, the server determines that the first topic filter supports tag matching.

For example, if the first flag bit includes the second value, the subscribe service module may determine whether the second flag bit corresponding to the first topic filter includes the third value. If the second flag bit includes the third value, it is determined that the first topic filter supports tag matching. If the second flag bit includes the fourth value, it is determined that the first topic filter does not support tag matching.

It should be noted that bits of a reserved field at which the first flag bit and the second flag bit are respectively located may be preset, and specific locations of the first flag bit and the second flag bit are configured in the server.

In addition, a process of associating the first topic filter with the subscribe tree is: determining, based on a layered status of the first topic filter, whether a first topic level of the subscribe tree includes a first topic level of the first topic filter; if the first topic level of the subscribe tree does not include the first topic level of the first topic filter, connecting a root node to the first topic level, and then successively connecting the first topic level to a second topic level of the first topic filter, ending with a last topic level; if the first topic level of the subscribe tree includes the first topic level of the first topic filter, determining whether a second topic level below the first topic level of the subscribe tree includes the second topic level of the first topic filter; if the second topic level of the subscribe tree does not include the second topic level of the first topic filter, connecting the second topic level to the first topic level of the subscribe tree, and then successively connecting a third topic level to the second topic level of the first topic filter, ending with the last topic level; if the second topic level of the subscribe tree includes the second topic level of the first topic filter, continuing to determine whether a third topic level below the second topic level of the subscribe tree includes the third topic level of the first topic filter until a last topic level of the first topic filter is connected to the subscribe tree.

For example, as shown in Table 2 in step 301, assuming that a subscribe message first received by the server is sent by a subscribe client whose identifier is C1, topic filters included in the subscribe message are "thermometer/+" and "ammeters/#", and the first flag bit of the subscribe message is 1, the server may first connect a first topic level "thermometer" of the topic filter "thermometer/+" to the root node and connect a second topic level "+" to the first topic level "thermometer", then connect a first topic level "ammeters" of the topic filter "ammeters/#" to the root node and connect a second topic level "#" to the first topic level "ammeters", and respectively store, in the second level "+" and the second level "#", C1 and indication information used to indicate that C1 supports tag matching. For ease of distinguishing, an example in which C1' indicates that C1 supports tag matching, and C1 indicates that C1 does not support tag matching is used for description. Other identifiers are similar. Assuming that a first flag bit of a subscribe message that is received by the server and that is sent by a subscribe client whose identifier is C2 is 0, and a second flag bit is 1, the server may associate a second topic level "5678" of a topic filter "ammeters/5678" with "ammeters" in the subscribe tree, and store C2' in the second topic level 5678. Assuming that a first flag bit of a subscribe message that is received by the server and that is sent by a subscribe client whose identifier is C3 is 0, and a second flag bit is 0, the server may associate a second topic level "1234" of a topic filter "thermometer/1234" with a first topic level "thermometer" in the subscribe tree, and store C3 in the second topic level "1234". Assuming that a first flag bit of a subscribe message that is received by the server and that is sent by a subscribe client whose identifier is C6 is 0, a second flag bit corresponding to the topic filter "thermometer/1234" is 1, and a second flag bit corresponding to the topic filter "ammeters/5678" is 0, the server may store C6' in the second topic level "1234" below the first topic level "thermometer" in the subscribe tree, and store C6 in the second topic level "5678" below the first topic level "ammeters" in the subscribe tree. Assuming that a first flag bit of a subscribe message that is received by the server and that is sent by a subscribe client whose identifier is C8 is 0, a second flag bit corresponding to a topic filter "thermometer/+" is 1, and a second flag bit corresponding to a topic filter "ammeters/+" is 0, the server may store C8 in a second topic level "+" below a first topic level "thermometer" in the subscribe tree, connect a second topic level "+" to a first topic level "ammeters" in the subscribe tree, and store C8 in the second topic level "+" below the first topic level "ammeters" in the subscribe tree. Assuming that first flag bits of subscribe messages that are received by the server and that are sent by a subscribe client whose identifier is C4, a subscribe client whose identifier is C5, and a subscribe client whose identifier is C7 are all 1, the server may store C4' and C7' in the second topic level "+" below the first topic level "thermometer" in the subscribe tree, and store C5' in the second topic level "#" below the first topic level "ammeters" in the subscribe tree. A final subscribe tree is shown in FIG. 6, and an example in which "thermometer" is a temperature sensor and "ammeters" is a meter is used in FIG. 6 for illustration.

Manner 3: When determining that the identification information corresponding to the first topic filter includes the fifth value, the server determines that the first topic filter supports tag matching.

For example, in the manner of indicating whether the topic filter supports tag matching in the manner 2 in step 302, the subscribe service module may obtain, based on the identifier of the subscribe client, the first topic filter, and a second mapping table stored in the session management module, the identification information corresponding to the first topic filter. Each entry of the second mapping table includes an identifier of a client, at least one topic filter corresponding to the identifier of the client, and identification information corresponding to each of the at least one topic filter.

For example, Table 3 is the second mapping table stored in the session management module. An example in which the fifth value included in the identification information is 1, and the sixth value is 0 is used herein for description.

**Table 3**

| Identifier of the subscribe client | Topic filter | Identification information |
|---|---|---|
| C1 | thermometer/+ | 1 |
| | ammeters/# | 1 |
| C2 | ammeters/# | 0 |

Assuming that the identifier of the subscribe client is C1, and the first topic filter is "ammeters/#", the identification information that is corresponding to the first topic filter "ammeters/#" and that is obtained by the subscribe service module is 1. In this case, the subscribe service module determines that the first topic filter supports tag matching.

It should be noted that when a status of whether a topic filter supports tag matching is changed, identification information corresponding to the topic filter in the session management module may be dynamically adjusted by using the communications interface, and corresponding indication information in the subscribe tree may be correspondingly changed. Specifically, when the first topic filter changes from "supporting tag matching" to "not supporting tag matching", the identification information corresponding to the first topic filter may be adjusted from the fifth value to the sixth value, and the indication information that is used to indicate that the subscribe client supports tag matching and that is in the subtree that stores the last topic level of the first topic filter is replaced with the indication information used to indicate that the subscribe client does not support tag matching. When the first topic filter changes from "not supporting tag matching" to "supporting tag matching", the identification information corresponding to the first topic filter may be adjusted from the sixth value to the fifth value, and the indication information that is used to indicate that the subscribe client does not support tag matching and that is in the subtree that stores the last topic level of the first topic filter is replaced with the indication information used to indicate that the subscribe client supports tag matching. In this way, a status of whether the topic filter supports tag matching is managed in the server, so that the topic filter in the subscribe message and the status of whether the topic filter supports tag matching are separated. Therefore, when the topic filter remains unchanged, and the status of whether the topic filter supports tag matching is changed, the identification information corresponding to the topic filter in the server may be adjusted, and the subscribe client does not need to renew a subscription to the topic filter after canceling the subscription.

304. A publish client sends a publish message to the server.

The publish message includes a topic name and a QoS identifier. In addition, the publish message may include a persistence identifier, or may include no persistence identifier. The persistence identifier is used to instruct the server to store the publish message.

305. The server receives the publish message sent by the publish client, and obtains an identifier of the publish client based on the publish message.

After receiving the publish message sent by the publish client, and after determining that the publish client has permission for publish, the ACL module of the server may obtain, based on a session in which the publish message is received, the identifier that is of the publish client and that is corresponding to the session, and send an instruction to a publish service module. After receiving the instruction, the publish service module may return a response message to the publish client based on the QoS identifier, and store the publish message in the session of the publish client for a period of time. If the publish message includes the persistence identifier, the publish service module may instruct a persistence module to store the publish message in a disk, a tape, or the like, so that after receiving the subscribe message sent by the subscribe client, the server can send a persistence message to the subscribe client after determining that the subscribe client subscribes to the persistence message, and does not need to send a new publish message to the subscribe client after the server receives the new publish message.

It should be noted that in this embodiment of this application, after receiving the subscribe message sent by the subscribe client and obtaining the identifier of the subscribe client based on the subscribe message in step 302, the server may first obtain at least one pre-stored persistent message, use the at least one topic filter included in the subscribe message as a subscribe tree, and perform topic matching and tag matching to determine persistence messages that are to be sent to the subscribe client. A specific process in which the server searches the subscribe tree based on a topic name included in any persistence message and performs tag matching is similar to that described in the following steps 306 to 310. Details are not described herein. Then, the server associates the at least one topic filter included in the subscribe message with the pre-stored subscribe tree, and performs the following steps 306 to 310 when receiving a new publish message.

306. The server searches the subscribe tree based on a topic name, to obtain the identifier of the subscribe client.

After the server obtains the identifier of the publish client, a topic matching module of the server may traverse topic levels in the subscribe tree layer by layer, compare topic levels of the topic name with corresponding topic levels in the subscribe tree, to obtain a topic filter that successfully matches the topic name, and obtain the identifier of the subscribe client from a last topic level of the topic filter.

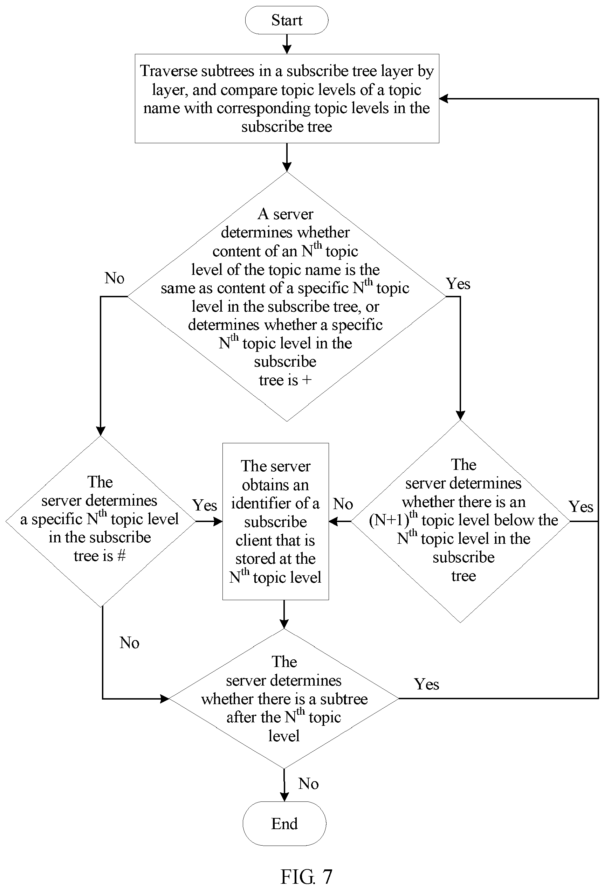

In specific implementation, FIG. 7 is a flowchart of performing topic matching layer by layer. As shown in FIG. 7, the topic matching module of the server may traverse the topic levels in the subscribe tree layer by layer, and compare the topic levels of the topic name with the corresponding topic levels in the subscribe tree. For an N^{th} topic level, the server may compare an N^{th} topic level of the topic name with all N^{th} topic levels in the subscribe tree, first determine whether content of the N^{th} topic level of the topic name is the same as content of a specific N^{th} topic level in the subscribe tree or determine whether a specific N^{th} topic level in the subscribe tree is "+", and if the content of the N^{th} topic level of the topic name is the same as content of an N^{th} topic level below an (N-1)^{th} topic level in the subscribe tree or if an N^{th} topic level below an (N-1)^{th} topic level in the subscribe tree is "+", it indicates that matching at this layer succeeds. The server may determine whether there is an (N+1)^{th} topic level below the N^{th} topic level in the subscribe tree; if there is the (N+1)^{th} topic level below the N^{th} topic level in the subscribe tree, the server continues to perform matching of a next topic level; if there is no (N+1)^{th} topic level below the N^{th} topic level in the subscribe tree, it indicates that the topic name and the topic filter successfully match, and the server may obtain the identifier of the subscribe client that is stored at the N^{th} topic level. Otherwise, the server determines whether a specific N^{th} topic level in the subscribe tree is "#", and if the N^{th} topic level in the subscribe tree is "#", it indicates that the topic name and the topic filter successfully match, and the server may obtain the identifier of the subscribe client that is stored at the N^{th} topic level. If the N^{th} topic level in the subscribe tree is not "#", the server may determine whether there is a subtree after the N^{th} topic level, and if there is the subtree after the N^{th} topic level, may match the N^{th} topic level of the topic name with the N^{th} topic level. In addition, after obtaining the identifier of the subscribe client that is stored at the N^{th} topic level, the publish service module may determine whether there is a subtree after the N^{th} topic level, and if there is the subtree after the N^{th} topic level, match the N^{th} topic level of the topic name with the N^{th} topic level.

For example, assuming that the topic name received by the server is "thermometer/1234", a first topic level "thermometer" of the topic name and a first topic level "thermometer" in the subscribe tree successfully match. In this case, the server successfully matches a second topic level "1234" of the topic name with a second topic level "+" below the first topic level "thermometer" in the subscribe tree, and the obtained identifier of the subscribe client is C1', C4', C7', and C8'. In addition, the server determines that there is another second topic level "1234" below the first topic level "thermometer" in the subscribe tree, content of the another second topic level "1234" is the same as content of the second topic level "1234" of the topic name, and the obtained identifier of the subscribe client is C3 and C6'. The server determines that the first topic level of the topic name and another first topic level "ammeters" in the subscribe tree do not match.

For another example, assuming that the topic name received by the server is "Thermometer/2345", because the topic is case-sensitive, a first topic level "Thermometer" of the topic name and the first topic level "thermometer" in the subscribe tree do not match. In addition, the first topic level "Thermometer" of the topic name and the first topic level "ammeters" in the subscribe tree do not match.

For another example, assuming that the topic name received by the server is "things/12/temp", a first topic level "things" of the topic name matches neither the first topic level "thermometer" nor the first topic level "ammeters" in the subscribe tree.

It should be noted that to resolve a problem that it is difficult to maintain a subscribe relationship on the subscribe client while on-demand offloading of the publish message is implemented, after the topic matching module of the server obtains the identifier of the subscribe client, the following steps 307 to 310 may be performed for any one of the plurality of identifiers of the subscribe clients.

307. The server determines that a subtree that stores the identifier of the subscribe client further stores indication information used to indicate that the subscribe client supports tag matching.

The topic matching module may determine whether the subtree that stores the identifier of the subscribe client further stores the indication information used to indicate that the subscribe client supports tag matching. If it is determined that the subtree that stores the identifier of the subscribe client stores the indication information used to indicate that the subscribe client supports tag matching, it indicates that the subscribe client supports tag matching. In this case, the following step 308 may be performed. If it is determined that the subtree that stores the identifier of the subscribe client stores the indication information used to indicate that the subscribe client does not support tag matching, it indicates that the subscribe client does not support tag matching, and the topic matching module may send the publish message to the subscribe client by using the publish service module. In this way, a tag of a client is maintained in the server. Therefore, compared with the prior art 2 in which an zone identifier is added to a topic, an original subscribe and publish mechanism that supports only topic matching in the prior art is reserved.

308. The server obtains, based on the identifier of the subscribe client and a first mapping table, a first tag corresponding to the identifier of the subscribe client, and obtains, based on the identifier of the publish client and the first mapping table, a second tag corresponding to the identifier of the publish client.

The tag is used to indicate at least one type of attribute information of a client corresponding to the tag. After determining that the subtree that stores the identifier of the subscribe client further stores the indication information used to indicate that the subscribe client supports tag matching, the topic matching module may instruct a tag management module to obtain the first tag corresponding to the identifier of the subscribe client and obtain the second tag corresponding to the identifier of the publish client, from the first mapping table.

It should be noted that in this embodiment of this application, each entry of the first mapping table includes an identifier of the client and a tag corresponding to the identifier of the client, and the tag is used to indicate at least one type of attribute information of the client. The attribute information may include an attribute name and an attribute value. The attribute value may be a single value, or may be a plurality of values such as an array or a list, or may be a logical expression supported by a tag engine module, or may be content of a lightweight data exchange format (JavaScript object notation) based on a JavaScript language. In addition to a unique identifier and attribute information included in a correspondence, attribute information of a client may further include a display name and the like.

In addition, because a client includes the publish client and the subscribe client, an attribute value included in a tag varies with a type of a client. For example, if an attribute value of the publish client is a plurality of values, it indicates broadcast, which is equivalent to that a plurality of publish clients each publish two publish messages, and tags of the publish clients each include one of the plurality of values. For example, assuming that an attribute name of one type of attribute information of a publish client is a zone, and attribute values are sz and nj, it is equivalent to that two publish clients publish two messages, and the two publish clients each have one type of attribute information: a zone is equal to sz, and a zone is equal to nj. For example, if an attribute value of the subscribe client is a plurality of values, it indicates inclusion. If one of attribute values of a same type of attribute information of the publish client is the same as the attribute value of the subscribe client, the attribute information of the subscribe client and the attribute information of the publish client successfully match. For example, assuming that an attribute name of one type of attribute information of the subscribe client is a zone, and attribute values are sz and nj, it is equivalent to that the subscribe client subscribes to both a message published by a publish client whose zone is equal to sz and a message published by a publish client whose "zone is equal to nj.

309. The server determines whether a preset logical relationship exists between an attribute value of each type of attribute information included in the first tag and an attribute value of corresponding attribute information included in the second tag.

After obtaining the first tag and the second tag, the tag management module may send the first tag and the second tag to the tag engine module. The tag engine module may determine whether the preset logical relationship exists between the attribute value of each type of attribute information included in the first tag and the attribute value of the corresponding attribute information included in the second tag, only when the preset logical relationship exists between the two attribute values, determine that this type of attribute information is successfully matched, only when all types of attribute information are successfully matched, determine that the first tag and the second tag successfully match, and return a matching success result to the publish service module, so that the publish service module sends the publish message to the subscribe client after receiving the matching success result.

It should be noted that in this embodiment of this application, a preset logical relationship is closely related to a type of attribute information. For example, the logical relationship may be an inclusion relationship of different attribute values.

310. The server sends the publish message to the subscribe client when determining that the first tag and the second tag successfully match.

It should be noted that after the server sends the publish message to the subscribe client, the server may determine whether there is the identifier of the subscribe client. If there is the identifier of the subscribe client, the server may repeatedly perform steps 307 to 310. If there is no identifier of the subscribe client, the server may determine whether there is a subtree at a topic level of a same layer. If there is the subtree at a topic level of a same layer, the server repeatedly performs steps 306 to 310 until a last topic filter that successfully matches the topic name is obtained, so as to obtain the identifier of the subscribe client and send the publish message to a last subscribe client that successfully matches the tag.

For example, in a multi-tenant scenario, it is assumed that the first tag and the second tag each include two types of attribute information: a tenant and a zone. In this case, when determining that an attribute value of a tenant of the subscribe client includes an attribute value of a tenant of the publish client and an attribute value of a zone of the subscribe client includes an attribute value of a zone of the publish client, the tag engine module may determine that the first tag and the second tag successfully match. For example, in the example in step 306, it is assumed that the identifier of the publish client that is obtained by the server is t1, and the identifier of the subscribe client that is obtained by the server is C1', C4', C7', and C8'. Table 4 shows an identifier of a client in the first mapping table and a tag corresponding to the identifier of the client. The tag includes a tenant and a zone.

**Table 4**

| Identifier of a client | Tag | |
|---|---|---|
| | Tenant | Zone |
| C1 | Tenant 1 | sz |
| C4 | Tenant 2 | nj |
| C7 | Tenant 1 | Sz, nj |
| C8 | Tenant 2 | nj |
| t1 | Tenant 1 | sz |

Therefore, after obtaining a tag corresponding to C1 and a tag corresponding to t1, the server determines that an attribute value "tenant 1" of a tenant of C1 includes an attribute value "tenant 1" of a tenant of tl, and an attribute value sz of a zone of C1 includes an attribute value sz of a zone of tl, and may send the publish message to the subscribe client whose identifier is C1. If determining that there is the identifier C4 of the subscribe client, the server determines that an attribute value "tenant 2" of a tenant of C4 is not equal to the attribute value "tenant 1" of the tenant of tl, and does not send the publish message to the subscribe client whose identifier is C4. If determining that there is the identifier C7 of the subscribe client, the server determines that an attribute value "tenant 1" of a tenant of C7 includes the attribute value "tenant 1" of the tenant of tl, and attribute values sz and nj of a zone of C7 include the attribute value sz of the zone of tl, and sends the publish message to the subscribe client whose identifier is C7. Similar to C4, the server does not send the publish message to the subscribe client whose identifier is C8.

For example, in a priority scenario, an attribute value may be a complex logical expression. It is assumed that the first tag and the second tag each include two types of attribute information: a zone and a priority. In this case, when determining that an attribute value of a zone of the publish client meets a logical expression of an attribute value of a zone of the subscribe client and an attribute value of a priority of the publish client meets a logical expression of an attribute value of a priority of the subscribe client, the tag engine module may determine that the first tag and the second tag successfully match, and send the publish message to the subscribe client. In this way, different subscribe clients process publish messages of different priorities by performing priority matching. For example, it is assumed that there are a subscribe client A and a subscribe client B. If the subscribe client A may use a faster network and more resources, and the subscribe client B uses a slower network and fewer resources, an attribute value of a priority in a tag corresponding to the subscribe client A may be set to be greater than 50 and an attribute value of a priority in a tag corresponding to the subscribe client B may be set to be less than 50 in the tag management module, so that the subscribe client A can process a publish message of a higher priority, and the subscribe client B processes a publish message of a lower priority.

For example, in the example in step 306, it is assumed that the identifier of the publish client that is obtained by the server is t1, and the identifier of the subscribe client that is obtained by the server is C1', C4', C7', and C8'. Table 5 shows an identifier of a client in the first mapping table and a tag corresponding to the identifier of the client. The tag includes a zone and a priority.

**Table 5**

| Identifier of a client | Tag | |
|---|---|---|
| | Zone | Priority |
| C1 | {$not: {$eq: sz}} | {$gt: 50} |
| C4 | {$in: [sz, nj]} | {$ge: 80} |
| C7 | {$or: {$eq: sz, $eq: nj}} | {$lt: 50} |
| C8 | {$and: [sz, nj]} | {$gt: 50} |
| t1 | sz | 60 |

In addition, operators used in Table 5 are described in this embodiment of this application: $not represents "non", $eq represents "equal to or inclusion", and is similar to $in ($eq emphasizes inclusion of a single value, and $in emphasizes that a value is an array), $or represents "or", $and represents "and", $gt represents that "greater than", $ge represents "greater than or equal to", $lt represents "less than", and $le represents "less than or equal to".

In this case, after obtaining the tag corresponding to C1 and the tag corresponding to t1, the server may determine that the attribute value sz of the zone of t1 does not meet a logical expression {$not: {$eq: Sz}} of the attribute value of the zone of C1, and the logical expression means that a zone other than sz is included, and the publish message is not sent to the subscribe client whose identifier is C1.

According to the subscribe and publish method provided in this embodiment of this application, after receiving the publish message that includes the topic name and that is sent by the publish client, and obtaining the identifier of the publish client based on the publish message, the server searches the subscribe tree based on the topic name in the publish message, to obtain the identifier that is of the subscribe client and that is corresponding to the topic filter that successfully matches the topic name. The server obtains the first tag based on the identifier of the subscribe client and the first mapping table, obtains the second tag based on the identifier of the publish client and the first mapping table, matches the first tag with the second tag, and sends the publish message to the subscribe client when determining that the first tag and the second tag successfully match. In this application, the first mapping table that records a correspondence between an identifier of a client and a tag is pre-stored in the server. When a topic name and a topic filter successfully match, the server may match attribute information of the publish client with that of the subscribe client, and when the attribute information of the publish client and that of the subscribe client successfully match, send the publish message to the subscribe client. In this way, when the subscribe client is migrated or expanded, the subscribe client does not need to republish a subscribe message, and only needs to change attribute information of a client, so as to resolve a problem that it is difficult for the subscribe client to maintain a subscribe relationship. In addition, the attribute information of the client in this application is a plurality of types of information that include zones. Compared with the prior art of matching only zones, the subscribe client may obtain publish messages of more dimensions, in other words, implement subscriptions of more dimensions. Therefore, scalability is better.

In addition, when determining that the identifier of the subscribe client is not an identifier used to indicate that the subscribe client supports tag matching, the server sends a publish message to the subscribe client. In this way, a tag of a client is maintained in the server. Therefore, compared with the prior art 2 in which an zone identifier is carried in a topic, a prior-art original subscribe and publish mechanism that supports only topic matching is reserved. A status of whether the topic filter supports tag matching is managed in the server, so that the topic filter in the subscribe message and the status of whether the topic filter supports tag matching are separated. Therefore, when the topic filter remains unchanged, and the status of whether the topic filter supports tag matching is changed, the identification information corresponding to the topic filter in the server may be adjusted, and the subscribe client does not need to renew a subscription to the topic filter after canceling the subscription.

The solutions provided in the embodiments of this application are mainly described from a perspective of interaction between network elements. It may be understood that to implement the foregoing functions, the server includes a corresponding hardware structure and/or software module for implementing each function. A person of ordinary skill in the art should easily be aware that, in combination with the examples described in the embodiments disclosed in this specification, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the server may be divided into function modules based on the foregoing method examples. For example, each function module may be obtained through division for a corresponding function, or two or more functions may be integrated into one processing module. The integrated module may be implemented in a form of hardware, or may be implemented in a form of a software functional module. It should be noted that the module division in the embodiments of this application is an example, and is merely logical function division, and there may be another division manner in actual implementation.

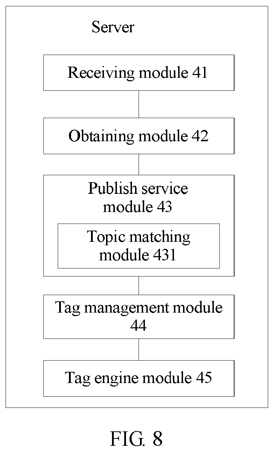

When each function module is obtained through division for a corresponding function, FIG. 8 is a possible schematic diagram of composition of the server in the foregoing embodiments. As shown in FIG. 8, the server may include a receiving module 41, an obtaining module 42, a publish service module 43, a tag management module 44, and a tag engine module 45, and the publish service module 43 may include a topic matching module 431.

The receiving module 41 is configured to perform step 202 of receiving a publish message sent by a publish client in the subscribe and publish method shown in FIG. 2, and step 302 of receiving a subscribe message sent by a subscribe client and step 305 of receiving the publish message sent by the publish client in the subscribe and publish method shown in FIG. 3.

The obtaining module 42 is configured to perform step 202 of obtaining an identifier of the publish client based on the publish message in the subscribe and publish method shown in FIG. 2, and step 302 of obtaining an identifier of the subscribe client based on the subscribe message and step 305 of obtaining the identifier of the publish client based on the publish message in the subscribe and publish method shown in FIG. 3.

The publish service module 43 is a module that processes the publish message, and is configured to perform step 206 in the subscribe and publish method shown in FIG. 2 and step 310 in the subscribe and publish method shown in FIG. 3, namely, send the publish message to the subscribe client after a matching success result returned by the tag engine module 45 is received, or send the publish message to the subscribe client after an instruction from a tag matching module 432 is received. In addition, the publish service module 43 is further configured to process the publish message after an instruction sent by an ACL module 48 is received. Specifically, if the publish message includes a persistence identifier, the publish service module 43 instructs a persistence module 49 to perform persistence of the publish message, in other words, store the publish message in a non-volatile medium such as a hard disk or a magnetic tape in a specific format, so that after receiving the subscribe message sent by the subscribe client, the server can send the persistence publish message to the subscribe client when determining that the subscribe client subscribes to the persistence publish message, and does not need to send a new publish message to the subscribe client after receiving the new publish message. The publish service module 43 is further configured to: return a response message to the publish client based on a QoS identifier included in the publish message, and store the publish message in a session corresponding to the identifier of the publish client for a period of time in the session management module 47, so that when the subscribe client that subscribes to the publish message is reconnected to the server after being disconnected, the publish service module 43 can send the publish message to the subscribe client when determining that the subscribe client subscribes to the publish message.

The topic matching module 431 is configured to perform step 203 in the subscribe and publish method shown in FIG. 2 and step 306 in the subscribe and publish method shown in FIG. 3, namely, search a subscribe tree based on a topic name included in the publish message, to obtain an identifier of a subscribe client corresponding to a topic filter that successfully matches the topic name.

The tag management module 44 is configured to manage a tag corresponding to a client, and may update a tag corresponding to an identifier of a client in real time. In specific implementation, the tag management module 44 is configured to perform step 204 in the subscribe and publish method shown in FIG. 2 and step 308 in the subscribe and publish method shown in FIG. 3, namely, after an instruction sent by a second subscribe processing module 462 is received, obtain, based on the identifier of the subscribe client and a first mapping table, a first tag corresponding to the identifier of the subscribe client, obtain, based on the identifier of the publish client and the first mapping table, a second tag corresponding to the identifier of the publish client, and send the first tag and the second tag to the tag engine module 45.

The tag engine module 45 is configured to perform step 205 in the subscribe and publish method shown in FIG. 2 and step 309 in the subscribe and publish method shown in FIG. 3, namely, match the first tag with the second tag, and return a matching result to the publish service module 43.

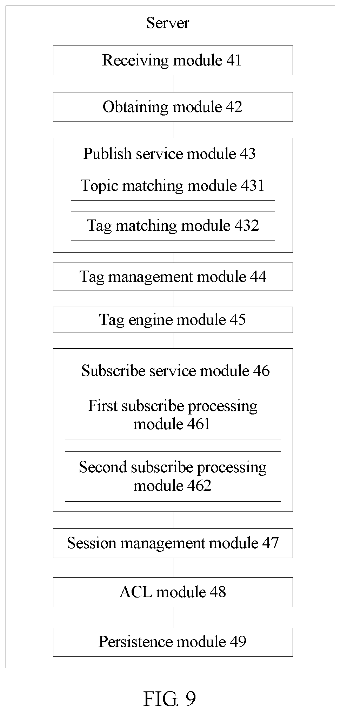

In this embodiment of this application, further, as shown in FIG. 9, the server may further include a subscribe service module 46, a session management module 47, an ACL module 48, and a persistence module 49. The publish service module 43 further includes a tag matching module 432, and the subscribe service module 46 further includes a first subscribe processing module 461 and a second subscribe processing module 462.

The tag matching module 432 is configured to: determine whether the subscribe client supports tag matching; and if the subscribe client supports tag matching, instruct the tag management module 44 to obtain the first tag corresponding to the identifier of the subscribe client and the second tag corresponding to the identifier of the publish client; or if the subscribe client does not support tag matching, instruct the publish service module 43 to send the publish message to the subscribe client.

The subscribe service module 46 is a module that processes the subscribe message, and is configured to perform step 303 in the subscribe and publish method shown in FIG. 3, namely, after an instruction sent by the ACL module 48 is received, determine whether each of at least one topic filter included in the subscribe message supports tag matching. For any topic filter, if the topic filter supports tag matching, an instruction is sent to the first subscribe processing module 461. The first subscribe processing module 461 is configured to: after receiving the instruction, associate the topic filter with a corresponding subtree in a subscribe tree, and store information about the subscribe client in a subtree that stores a last topic level of the topic filter. The information about the subscribe client includes the identifier of the subscribe client and indication information used to indicate that the subscribe client supports tag matching. If the topic filter does not support tag matching, an instruction is sent to the second subscribe processing module 462. The second subscribe processing module 462 is configured to: after receiving the instruction, associate the topic filter with a corresponding subtree in a subscribe tree, and store information about the subscribe client in a subtree that stores a last topic level of the topic filter. The information about the subscribe client includes the identifier of the subscribe client and indication information used to indicate that the subscribe client does not support tag matching.

The session management module 47 stores a second mapping table, each entry of the second mapping table includes an identifier of a client, at least one topic filter corresponding to the identifier of the client, and identification information corresponding to each of the at least one topic filter, and each piece of identification information is used to indicate whether a topic filter corresponding to the identification information supports tag matching. In other words, the session management module 47 is configured to perform the step of obtaining, based on the identifier of the subscribe client, the first topic filter, and a second mapping table, identification information corresponding to the first topic filter in the subscribe and publish method shown in FIG. 3. The session management module 47 is further configured to: after the client is reconnected to the server after being disconnected, renew a subscription based on a session when it is determined that the session of the client is within a validity period.

The ACL module 48 is configured to perform access authentication and operation authentication of a client, and the client may include the subscribe client and the publish client. In specific implementation, the ACL module 48 is configured to: after a connection request that is sent by the client and that includes a user name, a password, and an identifier of the client is received, perform authentication on the user name and the password, feed back a result to the client after the authentication succeeds, and generate and store, in the session management module 47, a session of the client and the identifier that is of the client and that is corresponding to the session. The ACL module 48 is further configured to: after the subscribe message sent by the subscribe client is received, determine whether the subscribe client has permission to subscribe to the at least one topic filter included in the subscribe message, and after determining that the subscribe client has the permission for subscribe, instruct the subscribe service module 46 to process the subscribe message. The ACL module 48 is further configured to: after the publish message sent by the publish client is received, determine whether the publish client has permission to publish a message to a specified topic name, and after determining that the publish client has the permission for publish, instruct the publish service module 43 to process the publish message.

The persistence module 49 is configured to perform persistence on the session, the subscribe message, and the publish message.

It should be noted that, all related content of steps in the foregoing method embodiments may be cited in function descriptions of corresponding function modules. Details are not further described herein.

The server provided in this embodiment of this application is configured to execute the foregoing subscribe publish method, so that a same effect as the foregoing subscribe publish method can be achieved.

When an integrated unit is used, the server may include a processing module, a communications module, and a storage module. The processing module may be a processor or a controller. The controller/processor may implement or execute various example logical blocks, modules, and circuits described with reference to content disclosed in this application. Alternatively, the processor may be a combination for implementing a computing function, for example, a combination of one or more microprocessors or a combination of a digital signal processor (DSP) and a microprocessor. The communications module may be a transceiver, a transceiver circuit, a communications interface, or the like. The storage module may be a memory.

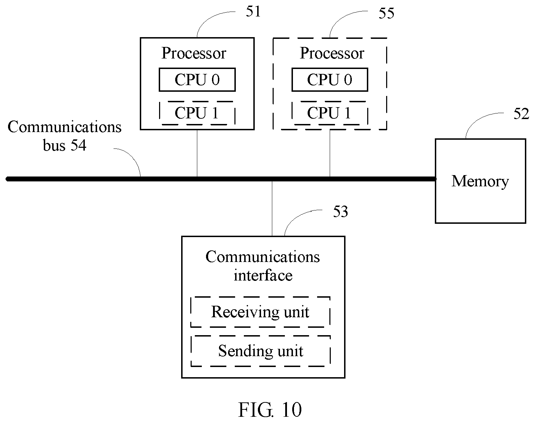

FIG. 10 is another possible schematic diagram of composition of the server in the foregoing embodiments. As shown in FIG. 10, the server includes a processor 51, a memory 52, a communications interface 53, and a communication bus 54.

The processor 51 is a control center of the server, and may be one processor or a collective term for a plurality of processing elements. For example, the processor 51 is a central processing unit (CPU), or may be an application-specific integrated circuit (ASIC) or one or more integrated circuits configured to implement this embodiment of this application, for example, one or more DSPs or one or more field-programmable gate arrays (FPGA).

The processor 51 may perform various functions of the server by running or executing a software program stored in the memory 52 and by invoking data stored in the memory 52. For example, the processor 51 is configured to perform step 202 of obtaining an identifier of the publish client based on the publish message, step 203, step 204, and step 205 in FIG. 2, step 302 of obtaining an identifier of the subscribe client based on the subscribe message, step 303, step 305 of obtaining an identifier of the publish client based on the publish message, step 306, step 307, step 308, and step 309 in FIG. 3, and/or another process used in the technology described in this specification.

In specific implementation, in an embodiment, the processor 51 may include one or more CPUs such as a CPU 0 and a CPU 1 shown in FIG. 10. In an embodiment, the server may include a plurality of processors such as the processor 51 and a processor 55 shown in FIG. 10. Each of the processors may be a single-core processor (single-CPU), or may be a multi-core processor (multi-CPU) processor. The processor herein may be one or more devices, circuits, and/or processing cores configured to process data (for example, a computer program instruction).

The memory 52 may be a read-only memory (ROM) or another type of static storage device that can store static information and instructions, or a random access memory (RAM) or another type of dynamic storage device that can store information and instructions; or may be an electrically erasable programmable read-only memory (EEPROM), a compact disc read-only memory (CD-ROM), or other compact disc storage, optical disc storage (which includes a compact disc, a laser disc, an optical disc, a digital versatile disc, a Blu-ray disc, and the like), and a disk storage medium or another magnetic storage device, or any other medium that can be used to carry or store expected program code having an instruction or data structure form and that can be accessed by a computer. However, this is not limited herein. The memory 52 may exist independently, and is connected to the processor 51 by using the communications bus 54. Alternatively, the memory 52 may be integrated into the processor 51.

The memory 52 is configured to store a software program for performing the solutions of this application, and the processor 51 controls execution of the software program.

The communications interface 53 uses an apparatus such as any transceiver to communicate with another device or a communications network, such as a subscribe client, a publish client, a radio access network (RAN), or a wireless local area network (WLAN). In specific implementation, the server may receive, by using the communications interface 53, attribute information of a tag of the subscribe client that is sent by the subscribe client, and attribute information of a tag of the publish client that is sent by the publish client. The communications interface 53 may include a receiving unit to implement a receiving function and a sending unit to implement a sending function. For example, the communications interface 53 is configured to perform step 202 of receiving the publish message sent by the publish client and step 206 in FIG. 2, and step 302 of receiving the publish message sent by the publish client, step 305 of receiving the publish message sent by the publish client, and step 310 in FIG. 3.

In specific implementation of this embodiment of this application, the communications interface 53 is an interface through which a serving end running on the server provides a service. Because communication may be performed based on the Transmission Control Protocol/Internet Protocol (TCP/IP) in the MQTT protocol, the communications interface 53 is bound to a serving port 1833 by default. Certainly, communication may also be performed based on another protocol such as the Socket protocol in the MQTT protocol. In this case, a communications interface 53 connected to another serving port needs to be configured. Therefore, based on different communications protocols, the server may configure different communications interfaces 53 as required. In addition, the server may configure a communications interface 53 configured to manage a tag, and may dynamically adjust a tag of a client by using the communications interface 53. The server may further configure a communications interface 53 configured to manage a topic filter, and may dynamically change, by using the communications interface 53, identification information corresponding to the topic filter, so as to change a status of whether the topic filter supports tag matching. It should be noted that in this embodiment of this application, the communications interface 53 configured to manage a tag and the communications interface 53 configured to manage a topic filter may be a same interface, or may be different interfaces. Whether the communications interface configured to manage a tag and the interface configured to manage a topic filter are a same interface is not specifically limited in this embodiment of this application.

The communications bus 54 may be an Industry Standard Architecture (ISA) bus, a Peripheral Component Interconnect (PCI) bus, an Extended Industry Standard Architecture (EISA) bus, or the like. The bus may be classified into an address bus, a data bus, a control bus, and the like. For ease of representation, only one thick line is used to represent the bus in FIG. 10, but this does not mean that there is only one bus or only one type of bus.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application.

Therefore, the protection scope of this application shall be subject to the protection scope of the claims.

## Claims

1. A subscribe and publish method, wherein the method comprises:
receiving (202), by a server (13), a publish message sent by a publish client (11), wherein the publish message comprises a topic name;
obtaining, by the server (13), an identifier of the publish client based on the publish message;
searching (203), by the server (13), a subscribe tree based on the topic name, to obtain an identifier of a subscribe client (12), wherein the subscribe tree is a topology structure comprising at least one topic filter, and the identifier of the subscribe client is an identifier corresponding to a topic filter that matches the topic name;
obtaining (204), by the server, based on the identifier of the subscribe client (12) and a first mapping table, a first tag corresponding to the identifier of the subscribe client (12), wherein each entry of the first mapping table comprises an identifier of a client and a corresponding tag, and the tag is used to indicate at least one type of attribute information of the client corresponding to the tag;
obtaining, by the server (13) based on the identifier of the publish client (11) and the first mapping table, a second tag corresponding to the identifier of the publish client;
matching (205), by the server (13), the first tag with the second tag; and
sending (206), by the server (13), the publish message to the subscribe client when the first tag matches the second tag.

2. The method according to claim 1, wherein the obtaining, by the server (13) based on the identifier of the subscribe client (12) and a first mapping table, a first tag corresponding to the identifier of the subscribe client (12) comprises:
when the subscribe client supports tag matching, obtaining, by the server (13), the first tag based on the identifier of the subscribe client (12) and the first mapping table.

3. The method according to claim 1 or 2, wherein before the searching, by the server (13), a subscribe tree based on the topic name, to obtain an identifier of a subscribe client (12), the method further comprises:
receiving, by the server, a subscribe message sent by the subscribe client, wherein the subscribe message comprises at least one topic filter; and
obtaining, by the server, the identifier of the subscribe client based on the subscribe message.

4. The method according to claim 3, wherein each topic filter comprises a plurality of layers, each layer is a topic level, and each topic level is stored in a subtree of the subscribe tree; and the method further comprises:
when a first topic filter in the at least one topic filter of the subscribe message supports tag matching, associating, by the server (13), the first topic filter with the subscribe tree, and storing information about the subscribe client in a subtree that is in the subscribe tree and that stores a last topic level of the first topic filter, wherein the information about the subscribe client comprises the identifier of the subscribe client and indication information used to indicate that the subscribe client supports tag matching, and the first topic filter is any one of the at least one topic filter of the subscribe message.

5. The method according to claim 4, wherein the subscribe message further comprises a first flag bit, the first flag bit comprises a first value or a second value, the first value is used to indicate that each of the at least one topic filter supports tag matching, and the second value is used to indicate that the at least one topic filter comprises at least one topic filter that does not support tag matching.

6. The method according to claim 5, wherein:
when the first flag bit comprises the first value, determining, by the server, that the first topic filter supports tag matching.

7. The method according to claim 5, wherein the subscribe message further comprises a second flag bit corresponding to each of the at least one topic filter, each second flag bit comprises a third value or a fourth value, the third value is used to indicate that a topic filter corresponding to the second flag bit supports tag matching, and the fourth value is used to indicate that the topic filter corresponding to the second flag bit does not support tag matching.

8. The method according to claim 7, wherein:
when the first flag bit comprises the second value, and the second flag bit corresponding to the first topic filter comprises the third value, determining, by the server, that the first topic filter supports tag matching.

9. The method according to claim 4, wherein the method further comprises:
obtaining, by the server based on the identifier of the subscribe client, the first topic filter, and a second mapping table, identification information corresponding to the first topic filter, wherein each entry of the second mapping table comprises an identifier of a client, at least one topic filter corresponding to the identifier of the client, and identification information corresponding to each of the at least one topic filter, each piece of identification information comprises a fifth value or a sixth value, the fifth value is used to indicate that a topic filter corresponding to the identification information supports tag matching, and the sixth value is used to indicate that the topic filter corresponding to the identification information does not support tag matching; and
when the identification information corresponding to the first topic filter comprises the fifth value, determining, by the server, that the first topic filter supports tag matching.

10. The method according to any one of claims 4 to 9, wherein:
when the subtree that stores the identifier of the subscribe client further stores the indication information used to indicate that the subscribe client supports tag matching, determining, by the server, that the subscribe client supports tag matching.

11. The method according to any one of claims 1 to 10, wherein the attribute information comprises an attribute name and an attribute value, and the matching, by the server, the first tag with the second tag comprises:
comparing, by the server, an attribute value of each type of attribute information comprised in the first tag with an attribute value of corresponding attribute information comprised in the second tag, and determining (309) whether a preset logical relationship exists between the attribute value of each type of attribute information comprised in the first tag and the attribute value of the corresponding attribute information comprised in the second tag; and
when the preset logical relationship exists between the attribute value of each type of attribute information comprised in the first tag and the attribute value of the corresponding attribute information comprised in the second tag, determining, by the server, that the first tag matches the second tag.

12. The method according to claim 1 or 2, wherein the method further comprises:
receiving, by the server, a second subscribe message sent by a second subscribe client, wherein the second subscribe message comprises at least one topic filter;
obtaining, by the server, an identifier of the second subscribe client based on the second subscribe message;
obtaining, by the server, a pre-stored persistence message, wherein the persistence message is a persistence publish message, and the persistence message comprises a topic name;
searching, by the server (13), the subscribe tree based on the topic name comprised in the persistence message, to obtain the identifier that is of the second subscribe client and that is corresponding to a topic filter that matches the topic name in the persistence message;
obtaining, by the server (13), an identifier of a second publish client based on the persistence message;
obtaining, by the server (13) based on the identifier of the second publish client and the first mapping table, a third tag corresponding to the identifier of the second publish client;
obtaining, by the server (13) based on the identifier of the second subscribe client and the first mapping table, a fourth tag corresponding to the identifier of the second subscribe client;
matching, by the server (13), the third tag with the fourth tag; and
sending, by the server (13), the persistence message to the second subscribe client when the third tag matches the fourth tag.

13. A server (13), wherein the server (13) is configured to perform the method according to anyone of claims 1 to 12.

## Patentansprüche

1. Abonnement- und Veröffentlichungsverfahren, wobei das Verfahren Folgendes umfasst:
Empfangen (202), durch einen Server (13), einer Veröffentlichungsnachricht, die von einem Veröffentlichungsclient (11) gesendet wurde, wobei die Veröffentlichungsnachricht einen Themennamen enthält;
Erhalten, durch den Server (13), eines Identifikators des Veröffentlichungsclients basierend auf der Veröffentlichungsnachricht;
Durchsuchen (203), durch den Server (13), eines Abonnementbaums basierend auf dem Themennamen, um einen Identifikator eines Abonnementclients (12) zu erhalten, wobei der Abonnementbaum eine Topologiestruktur ist, die mindestens einen Themenfilter umfasst, und der Identifikator des Abonnementclients ein Identifikator ist, der einem Themenfilter entspricht, der mit dem Themennamen übereinstimmt;
Erhalten (204), durch den Server, basierend auf dem Identifikator des Abonnementclients (12) und einer ersten Zuordnungstabelle, eines ersten Tags, das dem Identifikator des Abonnementclients (12) entspricht, wobei jeder Eintrag der ersten Zuordnungstabelle einen Identifikator eines Clients und ein entsprechendes Tag umfasst, und das Tag verwendet wird, um mindestens einen Typ von Attributinformation des Clients anzuzeigen, der dem Tag entspricht;
Erhalten, durch den Server (13), basierend auf dem Identifikator des Veröffentlichungsclients (11) und der ersten Zuordnungstabelle, eines zweiten Tags, das dem Identifikator des Veröffentlichungsclients entspricht;
Abgleichen (205), durch den Server (13), des ersten Tags mit dem zweiten Tag; und
Senden (206), durch den Server (13), der Veröffentlichungsnachricht an den Abonnementclient, wenn das erste Tag mit dem zweiten Tag übereinstimmt.

2. Verfahren gemäß Anspruch 1, wobei das Erhalten, durch den Server (13), basierend auf dem Identifikator des Abonnementclients (12) und einer ersten Zuordnungstabelle, eines ersten Tags, das dem Identifikator des Abonnementclients (12) entspricht, Folgendes umfasst:
wenn der Abonnementclient Tag-"Matching" unterstützt, Erhalten, durch den Server (13), des ersten Tags basierend auf dem Identifikator des Abonnementclients (12) und der ersten Zuordnungstabelle.

3. Verfahren nach Anspruch 1 oder 2, wobei das Verfahren vor dem Durchsuchen, durch den Server (13), eines Abonnementbaums basierend auf dem Themennamen, um einen Identifikator eines Abonnementclients (12) zu erhalten, ferner Folgendes umfasst:
Empfangen, durch den Server, einer von dem Abonnementclient gesendeten Abonnementnachricht, wobei die Abonnementnachricht mindestens einen Themenfilter umfasst; und
Erhalten, durch den Server, des Identifikators des Abonnementclients basierend auf der Abonnementnachricht.

4. Verfahren gemäß Anspruch 3, wobei jeder Themenfilter eine Vielzahl von Schichten umfasst, jede Schicht eine Themenebene ist und jede Themenebene in einem Unterbaum des Abonnementbaums gespeichert ist; und das Verfahren ferner Folgendes umfasst:
wenn ein erster Themenfilter in dem mindestens einen Themenfilter der Abonnementnachricht Tag-"Matching" unterstützt, Zuordnen, durch den Server (13), des ersten Themenfilters zu dem Abonnementbaum, und Speichern von Informationen über den Abonnementclient in einem Unterbaum, der sich in dem Abonnementbaum befindet und der eine letzte Themenebene des ersten Themenfilters speichert, wobei die Informationen über den Abonnementclient den Identifikator des Abonnementclients und Anzeigeinformationen umfassen, die verwendet werden, um anzuzeigen, dass der Abonnementclient Tag-"Matching" unterstützt, und der erste Themenfilter irgendeiner von dem mindestens einen Themenfilter der Abonnementnachricht ist.

5. Verfahren gemäß Anspruch 4, wobei die Abonnementnachricht ferner ein erstes "Flag"-Bit umfasst, das erste "Flag"-Bit einen ersten Wert oder einen zweiten Wert umfasst, der erste Wert verwendet wird, um anzuzeigen, dass jeder des mindestens einen Themenfilters Tag-"Matching" unterstützt, und der zweite Wert verwendet wird, um anzuzeigen, dass der mindestens eine Themenfilter mindestens einen Themenfilter umfasst, der Tag-"Matching" nicht unterstützt.

6. Verfahren gemäß Anspruch 5, wobei:
wenn das erste "Flag"-Bit den ersten Wert enthält, Bestimmen, durch den Server, dass der erste Themenfilter Tag-"Matching" unterstützt.

7. Verfahren gemäß Anspruch 5, wobei die Abonnementnachricht ferner ein zweites "Flag"-Bit umfasst, das jedem des mindestens einen Themenfilters entspricht, wobei jedes zweite "Flag"-Bit einen dritten oder einen vierten Wert umfasst, wobei der dritte Wert verwendet wird, um anzuzeigen, dass ein dem zweiten "Flag"-Bit entsprechender Themenfilter Tag-"Matching" unterstützt, und der vierte Wert verwendet wird, um anzuzeigen, dass der dem zweiten "Flag"-Bit entsprechende Themenfilter Tag-"Matching" nicht unterstützt.

8. Verfahren gemäß Anspruch 7, wobei:
wenn das erste "Flag"-Bit den zweiten Wert umfasst und das zweite "Flag"-Bit, das dem ersten Themenfilter entspricht, den dritten Wert umfasst, Bestimmen, durch den Server, dass der erste Themenfilter Tag-"Matching" unterstützt.

9. Verfahren gemäß Anspruch 4, wobei das Verfahren ferner Folgendes umfasst:
Erhalten, durch den Server, basierend auf dem Identifikator des Abonnementclients, dem ersten Themenfilter und einer zweiten Zuordnungstabelle, von Identifikationsinformationen, die dem ersten Themenfilter entsprechen, wobei jeder Eintrag der zweiten Zuordnungstabelle einen Identifikator eines Clients, mindestens einen Themenfilter, der dem Identifikator des Clients entspricht, und Identifikationsinformationen, die jedem des mindestens einen Themenfilters entsprechen, umfasst, jede Identifikationsinformation einen fünften Wert oder einen sechsten Wert umfasst, der fünfte Wert verwendet wird, um anzuzeigen, dass ein Themenfilter, der der Identifikationsinformation entspricht, Tag-"Matching" unterstützt, und der sechste Wert verwendet wird, um anzuzeigen, dass der Themenfilter, der der Identifikationsinformation entspricht, Tag-"Matching" nicht unterstützt; und
wenn die Identifikationsinformation, die dem ersten Themenfilter entspricht, den fünften Wert umfasst, Bestimmen, durch den Server, dass der erste Themenfilter Tag-"Matching" unterstützt.

10. Verfahren gemäß einem der Ansprüche 4 bis 9, wobei:
wenn der Unterbaum, der den Identifikator des Abonnementclients speichert, ferner die Anzeigeinformationen speichert, die verwendet werden, um anzuzeigen, dass der Abonnementclient Tag-"Matching" unterstützt, Bestimmen, durch den Server, dass der Abonnementclient Tag-"Matching" unterstützt.

11. Verfahren gemäß einem der Ansprüche 1 bis 10, wobei die Attributinformationen einen Attributnamen und einen Attributwert umfassen, und der Abgleich, durch den Server, des ersten Tags mit dem zweiten Tag Folgendes umfasst:
Vergleichen, durch den Server, eines Attributwertes jeder Art von Attributinformation, die in dem ersten Tag enthalten ist, mit einem Attributwert einer entsprechenden Attributinformation, die in dem zweiten Tag enthalten ist, und Bestimmen (309), ob eine voreingestellte logische Beziehung zwischen dem Attributwert jeder Art von Attributinformation, die in dem ersten Tag enthalten ist, und dem Attributwert der entsprechenden Attributinformation, die in dem zweiten Tag enthalten ist, besteht; und
wenn die voreingestellte logische Beziehung zwischen dem Attributwert jeder Art von Attributinformation, die in dem ersten Tag enthalten ist, und dem Attributwert der entsprechenden Attributinformation, die in dem zweiten Tag enthalten ist, besteht, Bestimmen, durch den Server, dass das erste Tag mit dem zweiten Tag übereinstimmt.

12. Verfahren nach Anspruch 1 oder 2, wobei das Verfahren ferner Folgendes umfasst:
Empfangen, durch den Server, einer von einem zweiten Abonnementclient gesendeten zweiten Abonnementnachricht, wobei die zweite Abonnementnachricht mindestens einen Themenfilter umfasst;
Erhalten, durch den Server, eines Identifikators des zweiten Abonnementclients basierend auf der zweiten Abonnementnachricht;
Erhalten, durch den Server, einer vorgespeicherten Persistenznachricht, wobei die Persistenznachricht eine Persistenzveröffentlichungsnachricht ist und die Persistenznachricht einen Themennamen enthält;
Durchsuchen, durch den Server (13), des Abonnementbaums basierend auf dem in der Persistenznachricht enthaltenen Themennamen, um den Identifikator des zweiten Abonnementclients zu erhalten, der einem Themenfilter entspricht, der mit dem Themennamen in der Persistenznachricht übereinstimmt;
Erhalten, durch den Server (13), eines Identifikators eines zweiten Veröffentlichungsclients basierend auf der Veröffentlichungsnachricht;
Erhalten, durch den Server (13), basierend auf dem Identifikator des zweiten Veröffentlichungsclients und der ersten Zuordnungstabelle, eines dritten Tags, das dem Identifikator des zweiten Veröffentlichungsclients entspricht;
Erhalten, durch den Server (13), basierend auf dem Identifikator des zweiten Abonnementclients und der ersten Zuordnungstabelle, eines vierten Tags, das dem Identifikator des zweiten Abonnementclients entspricht;
Abgleichen, durch den Server (13), des dritten Tags mit dem vierten Tag; und
Senden, durch den Server (13), der Persistenznachricht an den zweiten Abonnementclient, wenn das dritte Tag mit dem vierten Tag übereinstimmt.

13. Server (13), wobei der Server (13) dazu ausgebildet ist, das Verfahren gemäß einem der Ansprüche 1 bis 12 durchzuführen.

## Revendications

1. Procédé d'abonnement et de publication, le procédé comprenant les étapes consistant à :
recevoir (202), par un serveur (13), un message de publication envoyé par un client de publication (11), le message de publication comprenant un nom de sujet ;
obtenir, par le serveur (13), un identifiant du client de publication sur la base du message de publication ;
rechercher (203), par le serveur (13), dans une arborescence d'abonnement sur la base du nom de sujet pour obtenir un identifiant d'un client d'abonnement (12),
l'arborescence d'abonnement étant une structure topologique qui comprend au moins un filtre de sujet, et l'identifiant du client d'abonnement étant un identifiant qui correspond à un filtre de sujet qui concorde avec le nom de sujet ;
obtenir (204), par le serveur, sur la base de l'identifiant du client d'abonnement (12) et d'une première table de correspondance, une première étiquette qui correspond à l'identifiant du client d'abonnement (12), chaque entrée de la première table de correspondance comprenant un identifiant d'un client et une étiquette correspondante, et l'étiquette étant utilisée pour indiquer au moins une information de type d'attribut du client qui correspond à l'étiquette ;
obtenir, par le serveur (13) sur la base de l'identifiant du client de publication (11) et de la première table de correspondance, une deuxième étiquette qui correspond à l'identifiant du client de publication ;
mettre en concordance (205), par le serveur (13), la première étiquette avec la deuxième étiquette ; et
envoyer (206), par le serveur (13), le message de publication au client d'abonnement quand la première étiquette concorde avec la deuxième étiquette.

2. Procédé selon la revendication 1, dans lequel l'obtention, par le serveur (13) sur la base de l'identifiant du client d'abonnement (12) et d'une première table de correspondance, d'une première étiquette qui correspond à l'identifiant du client d'abonnement (12) comprend l'étape consistant à :
quand le client d'abonnement prend en charge une concordance d'étiquettes, obtenir, par le serveur (13), la première étiquette sur la base de l'identifiant du client d'abonnement (12) et de la première table de correspondance.

3. Procédé selon la revendication 1 ou 2, le procédé comprenant en outre, avant la recherche, par le serveur (13), dans une arborescence d'abonnement sur la base du nom de sujet pour obtenir un identifiant d'un client d'abonnement (12), les étapes consistant à :
recevoir, par le serveur, un message d'abonnement envoyé par le client d'abonnement, le message d'abonnement comprenant au moins un filtre de sujet ; et
obtenir, par le serveur, l'identifiant du client d'abonnement sur la base du message d'abonnement.

4. Procédé selon la revendication 3, dans lequel chaque filtre de sujet comprend une pluralité de couches, chaque couche est un niveau de sujet et chaque niveau de sujet est stocké dans une sous-arborescence de l'arborescence d'abonnement ; et le procédé comprenant en outre les étapes consistant à :
quand un premier filtre de sujet dans l'au moins un filtre de sujet du message d'abonnement prend en charge une concordance d'étiquettes, associer, par le serveur (13), le premier filtre de sujet à l'arborescence et stocker une information concernant le client d'abonnement dans une sous-arborescence qui est dans l'arborescence d'abonnement et qui stocke un dernier niveau de sujet du premier filtre de sujet, l'information concernant le client d'abonnement comprenant l'identifiant du client d'abonnement et une information d'indication utilisée pour indiquer que le client d'abonnement prend en charge une concordance d'étiquettes, et le premier filtre de sujet étant un filtre quelconque de l'au moins un filtre de sujet du message d'abonnement.

5. Procédé selon la revendication 4, dans lequel le message d'abonnement comprend en outre un premier bit indicateur, le premier bit indicateur comprend une première valeur ou une deuxième valeur, la première valeur est utilisée pour indiquer que chaque filtre de l'au moins un filtre de sujet prend en charge une concordance d'étiquettes, et la deuxième valeur est utilisée pour indiquer que l'au moins un filtre de sujet comprend au moins un filtre de sujet qui ne prend pas en charge une concordance d'étiquettes.

6. Procédé selon la revendication 5, dans lequel :
quand le premier bit indicateur comprend la première valeur, déterminer, par le serveur, que le premier filtre de sujet prend en charge une concordance d'étiquettes.

7. Procédé selon la revendication 5, dans lequel le message d'abonnement comprend en outre un second bit indicateur qui correspond à chaque filtre de l'au moins un filtre de sujet, chaque second bit indicateur comprend une troisième valeur ou une quatrième valeur, la troisième valeur est utilisée pour indiquer qu'un filtre de sujet qui correspond au second bit indicateur prend en charge une concordance d'étiquettes, et la quatrième valeur est utilisée pour indiquer que le filtre de sujet qui correspond au second bit indicateur ne prend pas en charge une concordance d'étiquettes.

8. Procédé selon la revendication 7, dans lequel :
quand le premier bit indicateur comprend la deuxième valeur et le second bit indicateur qui correspond au premier filtre de sujet comprend la troisième valeur, déterminer, par le serveur, que le premier filtre de sujet prend en charge une concordance d'étiquettes.

9. Procédé selon la revendication 4, le procédé comprenant en outre les étapes consistant à :
obtenir, par le serveur sur la base de l'identifiant du client d'abonnement, du premier filtre de sujet et d'une seconde table de correspondance, une information d'identification qui correspond au premier filtre de sujet, chaque entrée de la seconde table de correspondance comprenant un identifiant d'un client, au moins un filtre de sujet qui correspond à l'identifiant du client et une information d'identification qui correspond à chaque filtre de l'au moins un filtre de sujet, chaque élément d'information d'identification comprenant une cinquième valeur ou une sixième valeur, la cinquième valeur étant utilisée pour indiquer qu'un filtre de sujet qui correspond à l'information d'identification prend en charge une concordance d'étiquettes, et la sixième valeur étant utilisée pour indiquer que le filtre de sujet qui correspond à l'information d'identification ne prend pas en charge une concordance d'étiquettes ; et
quand l'information d'identification qui correspond au premier filtre de sujet comprend la cinquième valeur, déterminer, par le serveur, que le premier filtre de sujet prend en charge une concordance d'étiquettes.

10. Procédé selon l'une quelconque des revendications 4 et 9, dans lequel :
quand la sous-arborescence qui stocke l'identifiant du client d'abonnement stocke en outre l'information d'indication utilisée pour indiquer que le client d'abonnement prend en charge une concordance d'étiquettes, déterminer, par le serveur, que le client d'abonnement prend en charge une concordance d'étiquettes.

11. Procédé selon l'une quelconque des revendications 1 à 10, dans lequel l'information d'attribut comprend un nom d'attribut et une valeur d'attribut, et la mise en concordance, par le serveur, de la première étiquette avec la deuxième étiquette comprend les étapes consistant à :
comparer, par le serveur, une valeur d'attribut de chaque information de type d'attribut comprise dans la première étiquette à une valeur d'attribut d'une information d'attribut correspondante comprise dans la deuxième étiquette, et déterminer (309) si une relation logique prédéfinie existe entre la valeur d'attribut de chaque information de type d'attribut comprise dans la première étiquette et la valeur d'attribut de l'information d'attribut correspondante comprise dans la deuxième étiquette ; et
quand la relation logique prédéfinie existe entre la valeur d'attribut de chaque information de type d'attribut comprise dans la première étiquette et la valeur d'attribut de l'information d'attribut correspondante comprise dans la deuxième étiquette, déterminer, par le serveur, que la première étiquette concorde avec la deuxième étiquette.

12. Procédé selon la revendication 1 ou 2, le procédé comprenant en outre les étapes consistant à :
recevoir, par le serveur, un second message d'abonnement envoyé par un second client d'abonnement, le second message d'abonnement comprenant au moins un filtre de sujet ;
obtenir, par le serveur, un identifiant du second client d'abonnement sur la base du second message d'abonnement ;
obtenir, par le serveur, un message de persistance pré-stocké, le message de persistance étant un message de publication de persistance, et le message de persistance comprenant un nom de sujet ;
rechercher, par le serveur (13), dans l'arborescence d'abonnement sur la base du nom de sujet compris dans le message de persistance pour obtenir l'identifiant qui est du second client d'abonnement et qui correspond à un filtre de sujet qui concorde avec le nom de sujet dans le message de persistance ;
obtenir, par le serveur (13), un identifiant d'un second client de publication sur la base du message de persistance ;
obtenir, par le serveur (13) sur la base de l'identifiant du second client de publication et de la première table de correspondance, une troisième étiquette qui correspond à l'identifiant du second client de publication ;
obtenir, par le serveur (13) sur la base de l'identifiant du second client d'abonnement et de la première table de correspondance, une quatrième étiquette qui correspond à l'identifiant du second client d'abonnement ;
mettre en concordance, par le serveur (13), la troisième étiquette avec la quatrième étiquette ; et
envoyer, par le serveur (13), le message de persistance au second client d'abonnement quand la troisième étiquette concorde avec la quatrième étiquette.

13. Serveur (13), le serveur (13) étant configuré pour réaliser le procédé selon l'une quelconque des revendications 1 à 12.
